# EUROPÄISCHE PATENTSCHRIFT

(11) **EP 0 670 231 B1**
(45) Veröffentlichungstag und Bekanntmachung des Hinweises auf die Patenterteilung: **16.06.1999**
(21) Anmeldenummer: 95101343.2
(22) Anmeldetag: 01.02.1995
(51) Int. Cl.: B60G 17/048

(54) **Luftfederaggregat**
Pneumatic spring
Ressort pneumatique

(30) Priorität: 01.03.1994 DE 4406607
(43) Veröffentlichungstag der Anmeldung: 06.09.1995
(73) Patentinhaber: DaimlerChrysler AG, 70567 Stuttgart (DE)
(72) Erfinder: Barske, Jörg, Dipl.-Ing., D-70619 Stuttgart (DE); Köster, Rolf, Dipl.-Ing., D-70329 Stuttgart (DE)

(56) Entgegenhaltungen:
- DE-A- 2 937 008
- DE-A- 3 939 098
- FR-E- 74 331
- US-A- 3 000 624
- US-A- 3 031 180
- US-A- 3 122 378
- US-A- 3 372 919

## Beschreibung

Die Erfindung betrifft ein Luftfederaggregat mit einer Luftkammer, die durch ein Oberteil, ein Unterteil und einen dazwischen angeordneten Balg begrenzt wird und über ein Ventil entlüftbar bzw. mit Druckluft beaufschlagbar ist, und mit einem in der Luftkammer untergebrachten Stoßdämpfer, dessen Zylinder am Ober- oder Unterteil und dessen Kolbenstange am Unter- oder Oberteil des Luftfederaggregates fest angeordnet ist, sowie mit einer in der Luftkammer angeordneten Führung, die mit in der Luftkammer untergebrachten Stellorganen des Ventiles zusammenwirkt, so daß das Ventil wegabhängig in Abhängigkeit vom Federhub steuerbar ist.

Bei Nutzfahrzeugen werden häufig Luftfederaggregate zur Verbesserung des Federungskomforts eingesetzt. Damit wird neben einem die Nutzlast schonenden Transport auch die Möglichkeit geboten, ein gewünschtes Niveau des Fahrzeuges oder des Fahrerhauses bei unterschiedlicher Beladung oder Gewichtsbelastung zu halten oder einstellbar zu verändern. Um eine gewünschte Progressivität der Federkräfte der Luftfederaggregates zu erreichen, wird die pneumatische Energie der Luftkammer über entsprechende Ventile verändert, die die Luftkammer mit einer pneumatischen Druckquelle oder der Atmosphäre verbinden bzw. nach außen absperren.

Die US 3 000 642 zeigt eine Luftfederung der eingangs angegebenen Art. Dabei wirken die Stellorgane des Ventiles mit einer am Stoßdämpferzylinder ausgebildeten Führung zusammen, um die Luftzufuhr bzw. Luftabfuhr wegabhängig zu steuern.

Bei einem aus der DE 34 42 622 C2 bekannten Luftfederaggregat mit innerhalb des Aggregates angeordnetem Stoßdämpfer ist vorgesehen, innerhalb einer durch das Ober- sowie das Unterteil und den Balg abgegrenzten äußeren Luftkammer des Luftfederaggregates eine zweite Luftkammer anzuordnen, die durch einen am Zylinder des Stoßdämpfers fest angeordneten Kolben sowie einen diesen verschiebbar aufnehmenden Zylinder umgrenzt wird, der fest am Oberteil des Luftfederaggregates angeordnet ist. Durch eine extern steuerbare Ventilanordnung können die beiden Luftkammern miteinander verbunden bzw. voneinander abgetrennt werden, wobei die Luftzufuhr von einer Druckluftquelle an die innere Luftkammer angeschlossen ist, d.h. die äußere Luftkammer kann nur bei geöffneter Verbindung mit der inneren Luftkammer mit zusätzlicher Druckluft beaufschlagt werden. Auf diese Weise soll eine gewisse Sicherung bei Schäden des Balges erreicht werden. Außerdem ergeben sich erweiterte Möglichkeiten bei der Steuerung der Progressivität des Luftfederaggregates.

Aus der DE-AS 10 56 488 ist es bekannt, das die Luftzufuhr zur Luftkammer bzw. die Luftabfuhr aus der Luftkammer steuernde Ventil eines Luftfederaggregates über ein Gestänge zu betätigen, welches mit dem Balg des Luftfederaggregates antriebsmäßig verbunden ist, d.h. die bei Federungshüben auftretenden Verformungen des Balges steuern das genannte Ventil.

Aus der DE-AS 10 67 316 ist es bekannt, dieses Ventil pneumatisch unter Ausnutzung der bei Federungshüben auftretenden Druckänderungen in der Luftkammer zu steuern.

Nach der DE-AS 10 98 378 wird vorgeschlagen, dieses Ventil antriebsmäßig mit in der Luftkammer zwischen Unter- und Oberteil angeordneten Schraubenfedern zu koppeln, welche ein Betätigungsorgan des Ventiles je nach Federungshub in unterschiedliche Lagen drängen. Um Schwingungsresonanzen bei der Ventilsteuerung zu vermeiden, ist in der Antriebsübertragung eine Dämpferanordnung vorgesehen.

In der DE-OS 29 37 008 wird eine niveauregulierende Vorrichtung für Fahrzeuge beschrieben. Diese Vorrichtung besitzt ein beispielsweise mit einer Fahrzeugachse verbundenes Gehäuse, welches durch einen innerhalb des Gehäuses beweglichen Kolben, der beispielsweise mit dem Fahrzeugaufbau verbunden ist, in zwei Kammern unterteilt ist, deren Größenverhältnis sich entsprechend den Federungshüben verändert. Die achsseitige Kammer ist ständig mit der Atmosphäre verbunden, während die aufbauseitige Kammer je nach Maß des Federungshubes nach außen abgesperrt oder mit der anderen Kammer oder mit einer Vakuumquelle verbunden wird. Die zur Steuerung dieser Verbindungen dienende Ventilanordnung wird durch Stellorgane betätigt, die innerhalb des Gehäuses untergebracht sind.

Aufgabe der Erfindung ist es nun, bei einem Luftfederaggregat der eingangs angegebenen Art eine besonders zuverlässige Steuerung von Luftzufuhr und Luftabfuhr zu erreichen.

Diese Aufgabe wird erfindungsgemäß dadurch gelöst, daß die Führung an einer den Zylinder des Stoßdämpfers teleskopierbar umfassenden Hülse angeordnet ist, und daß die Hülse sowie die Kolbenstange des Stoßdämpfers fest mit dem Boden des Ober- bzw. Unterteiles und der Zylinder fest mit dem Boden des Unter- bzw. Oberteiles der Luftkammer verbunden sind.

Die Erfindung beruht auf dem allgemeinen Gedanken, einen mechanisch stabilen Aufbau des Luftfederaggregates zu erreichen, um die Ventilsteuerung besonders einfach und zuverlässig ausbilden zu können.

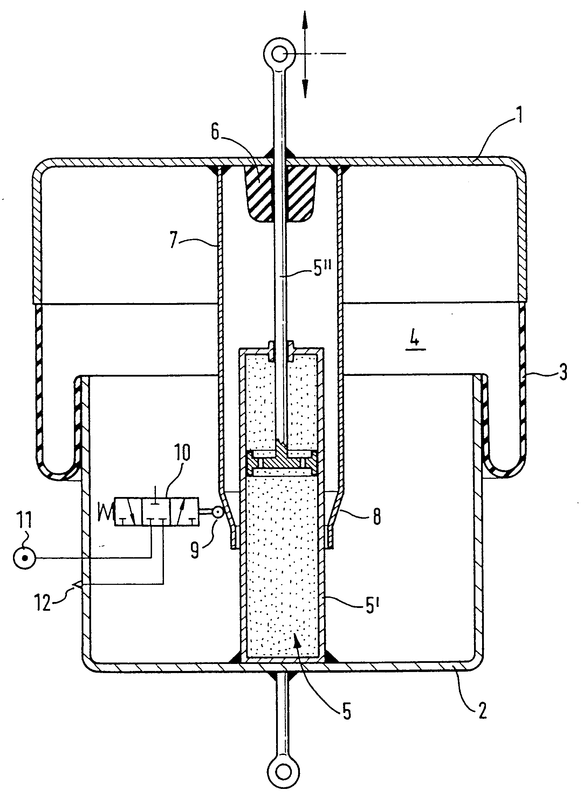

Im übrigen wird hinsichtlich bevorzugter Merkmale der Erfindung auf die Ansprüche sowie die nachfolgende Erläuterung einer besonders bevorzugten Ausführungsform verwiesen, die in der Zeichnung dargestellt ist.

Dabei zeigt die einzige Figur ein schematisiertes Schnittbild eines erfindungsgemäßen Luftfederaggregates.

Ein mit dem nicht dargestellten Fahrerhaus eines Kraftfahrzeuges verbundenes topfartiges Oberteil 1 mit kreisförmigem Querschnitt sowie ein mit einem nicht dargestellten Chassis verbundenes, ähnlich topfartiges Unterteil 2, dessen Durchmesser geringer ist als der Durchmesser des Oberteiles 1, sind miteinander über einen Rollbalg 3 hubbeweglich verbunden, so daß das Volumen einer von dem Oberteil 1, dem Unterteil 2 sowie dem Rollbalg 3 umschlossenen Luftkammer 4 entsprechend verändert wird.

Innerhalb der Luftkammer 4 ist zwischen den Böden von Ober- und Unterteil 1 und 2 ein grundsätzlich bekannter Stoßdämpfer 5 angeordnet, dessen Zylinder 5' im dargestellten Beispiel fest mit dem Boden des Unterteiles 2 verbunden ist, während die Kolbenstange 5'' in entsprechender Weise fest am Boden des Oberteiles 1 angeordnet ist. Durch einen mit der zugewandten Stirnseite des Zylinders 5' zusammenwirkenden elastischen Anschlagpuffer 6 am Boden des Oberteiles 1 wird der maximale Einschubweg der Kolbenstange 5'' in den Zylinder 5' und damit auch die maximale Annäherung der Böden von Ober- und Unterteil 1 und 2 begrenzt.

Am Boden des Oberteiles 1 ist des weiteren eine Hülse 7 angeordnet, welche den Zylinder 5' teleskopierbar umschließt, wobei der innerhalb der Hülse 7 verbleibende Raum - z.B. über eine Öffnung im Mantel der Hülse 7 - mit der Luftkammer 4 kommuniziert.

Die Hülse 7 besitzt einen Konus 8, der mit einem Stellorgan 9 eines am bzw. im Unterteil 2 angeordneten Steuerventiles 10 zusammenwirkt, über das die Luftkammer 4 je nach Hubstellung der Hülse 7 relativ zum Zylinder 5' nach außen abgesperrt (dargestellte Lage) oder mit einer pneumatischen Druckquelle 11 bzw. mit einem zur Atmosphäre führenden Auslaß 12 verbunden wird.

Bei einem starken Einfederhub wird dabei die Luftkammer 4 mit der pneumatischen Druckquelle 11 verbunden, um die pneumatische Energie der Luftkammer 4 deutlich zu erhöhen. Bei einem starken Ausfederhub erfolgt eine Verbindung der Luftkammer 4 mit dem Auslaß 12, so daß die pneumatische Energie der Luftkammer 4 entsprechend stark vermindert wird.

Durch die Anordnung des Steuerventiles 10 am bzw. - insbesondere - im Luftfederaggregat wird eine besonders einfach montierbare Anordnung geschaffen. Pneumatisch braucht das Luftfederaggregat lediglich mit der Druckquelle 11 verbunden zu werden. Im übrigen kann es in üblicher Weise zwischen Fahrerhaus und Chassis bzw. zwischen Chassis und Achse eines Fahrzeuges eingebaut werden. Damit sind zwangsläufig auch die zur Steuerung der pneumatischen Energie der Druckkammer 4 notwendigen Elemente fertig montiert.

## Patentansprüche

1. Luftfederaggregat, insbesondere für Kraftfahrzeuge, mit
- einer Luftkammer (4), die durch ein Oberteil (1), ein Unterteil (2) und einen dazwischen angeordneten Balg (3) begrenzt wird und über ein Ventil (10) entlüftbar bzw. mit Druckluft beaufschlagbar ist, und
- einem in der Luftkammer (4) untergebrachten Stoßdämpfer (5), dessen Zylinder (5') am Ober- oder Unterteil (1,2) und dessen Kolbenstange (5'') am Unter- oder Oberteil des Luftfederaggregates fest angeordnet ist, und
- einer in der Luftkammer angeordneten Führung (8), die mit in der Luftkammer untergebrachten Stellorganen (9) des Ventiles (10) zusammenwirkt, so daß das Ventil (10) wegabhängig in Abhängigkeit vom Federhub steuerbar ist,
**dadurch gekennzeichnet**,
daß die Führung an einer den Zylinder (5') des Stoßdämpfers (5) teleskopierbar umfassenden Hülse (7) angeordnet ist, und daß die Hülse (7) sowie die Kolbenstange (5'') des Stoßdämpfers (5) fest mit dem Boden des Ober- bzw. Unterteiles (1) und der Zylinder (5') fest mit dem Boden des Unter- bzw. Oberteiles (2) verbunden ist.

2. Luftfederaggregat nach Anspruch 1,
**dadurch gekennzeichnet**,
daß an der Hülse (7) ein Konus (8) zur Betätigung der Stellorgane (9) angeordnet bzw. ausgebildet ist.

3. Luftfederaggregat nach Anspruch 1 oder 2,
**dadurch gekennzeichnet**,
daß das Ventil (10) in der Luftkammer (4) angeordnet ist.

## Claims

1. A pneumatic spring unit, in particular for motor vehicles, with
- and air chamber (4) which is delimited by an upper section (1), a lower section (2) and a bellow (3), positioned between them, and from which air can be evacuated and to which air can be applied by means of a valve (10), and
- a shock absorber (5) housed in the air chamber (4), the cylinder (5') of which is fixed to the upper or lower section (1, 2) and the piston rod of which is fixed to the lower or upper section of the pneumatic spring unit, and
- a guide (8) located in the air chamber which works together with the control organs (9) housed in the air chamber in such a manner that the valve (10) can be controlled path-dependently in accordance with the spring travel,
**characterised in that**
the guide is positioned on a sleeve (7) which telescopically sheathes the cylinder (5') of the shock absorber (5), and that the sleeve (7) and the piston rod (5'') of the shock absorber (5) are fixed to the floor of the upper/lower section (1) and the cylinder (5') is fixed to the floor of the lower/upper section (2).

2. A pneumatic spring unit in accordance with Claim 1,
**characterised in that**
a cone (8) to actuate the control organs (9) is positioned or formed on the sleeve (7).

3. A pneumatic spring unit in accordance with Claim 1 or 2,
**characterised in that**
the valve (10) is positioned in the air chamber (4).

## Revendications

1. Ressort pneumatique, en particulier pour véhicules automobiles avec
- une chambre à air (4) qui est délimitée par une partie supérieure (1), une partie inférieure (2) et un soufflet (3), placé en position intermédiaire et susceptible d'être désaérée, respectivement alimentée en air comprimé, par l'intermédiaire d'une soupape (10), et
- un amortisseur (5) logé dans la chambre à air (4), dont le cylindre (5') est disposé rigidement sur la partie supérieure ou inférieure (1, 2) et dont la tige de piston (5'') est disposée rigidement sur la partie inférieure ou supérieure du ressort pneumatique, et
- un guidage (8) disposé dans la chambre à air, coopérant avec des organes de réglage (9) logés dans la chambre à air et appartenant à la soupape (10), de manière que la soupape (10) puisse être commandée en fonction du déplacement, selon la course de débattement élastique,
caractérisé en ce que
le guidage est disposé sur une douille (7) entourant de façon télescopique le cylindre (5') de l'amortisseur (5), et en ce que la douille (7), ainsi que la tige de piston (5'') de l'amortisseur (5), sont reliées rigidement au fond de la partie supérieure ou inférieure (1) et le cylindre (5') est relié rigidement au fond de la partie inférieure ou supérieure (2).

2. Ressort pneumatique selon la revendication 1, caractérisé en ce que sur la douille (7), est disposé ou réalisé un cône (8) destiné à l'actionnement des organes de réglage (9).

3. Ressort pneumatique selon la revendication 1 ou 2, caractérisé en ce que la soupape (10) est disposée dans la chambre à air (4).
